# EUROPÄISCHE PATENTSCHRIFT

(11) **EP 1 691 236 B1**
(45) Veröffentlichungstag und Bekanntmachung des Hinweises auf die Patenterteilung: **26.10.2011**
(21) Anmeldenummer: 06090020.6
(22) Anmeldetag: 02.02.2006
(51) Int. Cl.: G03B 37/00

(54) **Inspektionsvorrichtung für Schornsteine**
Chimney inspection device
Dispositif d'inspection destiné à des cheminées

(30) Priorität: 09.02.2005 DE 202005002330
(43) Veröffentlichungstag der Anmeldung: 16.08.2006
(73) Patentinhaber: Lauterbach, Folker, 48455 Bad Bentheim (DE)
(72) Erfinder: Lauterbach, Folker, 48455 Bad Bentheim (DE)
(74) Vertreter: Kayser, Christoph

(56) Entgegenhaltungen:
- DE-A1- 10 113 436
- DE-A1- 10 320 547

## Beschreibung

Die vorliegende Erfindung betrifft eine Inspektionsvorrichtung für Schornsteine gemäß Anspruch 1.

Inspektonsvorrichtungen sind aus dem allgemeinen Stand der Technik bekannt. Solche Inspektionsvorrichtungen umfassen Kameras, die in Kameraschutzgehäusen angeordnet sind und über ein Halteseil in einen Industrieschornstein herabgelassen werden. Die Kamera ist mit einem Steuerkabel verbunden, das zu diesem Zweck durch das Kameraschutzgehäuse hindurch geführt ist. Auch das Steuerkabel erstreckt sich somit über die gesamte abgelassene Länge des Halteseils in dem Industrieschornstein.

In einem solchen Industrieschornstein strömen bis zu 250°C heiße Rauchgase, die auf das Steuerkabel einwirken und auf die Lebensdauer desselben auf etwa 10 Inspektionen beschränken. Auch die mechanische Belastung eines solchen Kabels ist sehr groß, da Inspektionen häufig über eine Länge bis zu 450m durchgeführt werden. Aber auch eine genaue Steuerung über so große Längen ist mit einem einfachen Pressluft-System nicht möglich.

Die Aufgabe der vorliegenden Erfindung ist daher, eine Inspektionsvorrichtung mit einer Kamera und einem Kameraschutzgehäuse zu schaffen, die unter extremen äußeren klimatischen Bedingungen über lange Zeiträume zur Inspektion von Industrieschornsteinen einsetzbar ist und unter diesen Bedingungen eine genaue Steuerung und Positionierung der Kamera zulässt.

Die Aufgabe wird erfindungsgemäß durch die Merkmale des Anspruchs 1 gelöst.

Die erfindungsgemäße Inspektionsvorrichtung nutzt statt eines Steuerkabels die bereits für die Videobild-Übertragung aufgebaute Funkstrecke. Dadurch kann das Steuerkabel und eine entsprechende Durchführung durch das Kameraschutzgehäuse entfallen.

Für den vorgenannten professionellen Einsatz sind überwiegend stationär zu installierende Systeme bekannt, die mit von außen zugeführten Hilfsmitteln zur Kühlung arbeiten. Diese stationären Kamerasysteme sind nur während Stillstandszeiten einer zu überwachenden Anlage einzusetzen. Eine solche Überwachung ist für den Betreiber einer solchen Anlage daher mit hohen Kosten verbunden.

In solchen bekannten stationären Kamerasystemen werden die mit industriellen Einsätzen verbundenen Probleme einer hohen Temperatur und eines Beschlagens der Optik durch den Einsatz von Luft oder Wasser als Kühlmittel bzw. von Druckluft gelöst. Diese Hilfsmittel werden bestehenden Kamerasystemen von außen zugeführt. Dies erfordert einerseits eine recht aufwendige Technik und führt andererseits in mobilen Kamerasystemen auch nicht zu dem gewünschten Erfolg, weil sich die Hilfsstoffe (Luft, Wasser) dort auf dem Weg ihrer Zuleitung zum Einsatzort der Kamera selbst aufheizen würden und ihre Kühlwirkung verlören. Darüber hinaus würde sich auch das Einsatzgewicht des mobilen Kamerasystems in einer Weise erhöhen, die dessen Einsatz unpraktikabel macht.

Die erfindungsgemäße Inspektionsvorrichtung weist daher auch ein Kameraschutzgehäuse auf, das die Kamera völlig autark mit Hilfe eines Wärmespeichermediums sowie einer Abschottung des Innengehäuses kühlt. Mit diesem Kameraschutzgehäuse wird die Inspektion des Innenteils von Industrieschornsteinen ohne Unterbrechung des Anlagenbetriebs per Farbvideo erheblich erleichtert. Auch durch die dadurch erlangte technische Vereinfachung führt zu einer Verlängerung der Lebensdauer der gesamten Inspektionsvorrichtung.

Weitere Vorteile der Erfindung ergeben sich aus den Merkmalen der Unteransprüche 2 bis 20.

Eine Ausführungsform der vorliegenden Erfindung wird im Folgenden anhand der Zeichnung näher beschrieben. Es zeigen:
- Fig. 1: eine schematische Darstellung im Längsschnitt durch ein Kameraschutzgehäuse gemäß vorliegender Erfindung;
- Fig. 2: eine schematische Darstellung im Querschnitt durch ein Kameraschutzgehäuse gemäß vorliegender Erfindung.
- Fig. 3: eine schematische Gesamtdarstellung der Inspektionsvorrichtung gemäß vorliegender Erfindung;

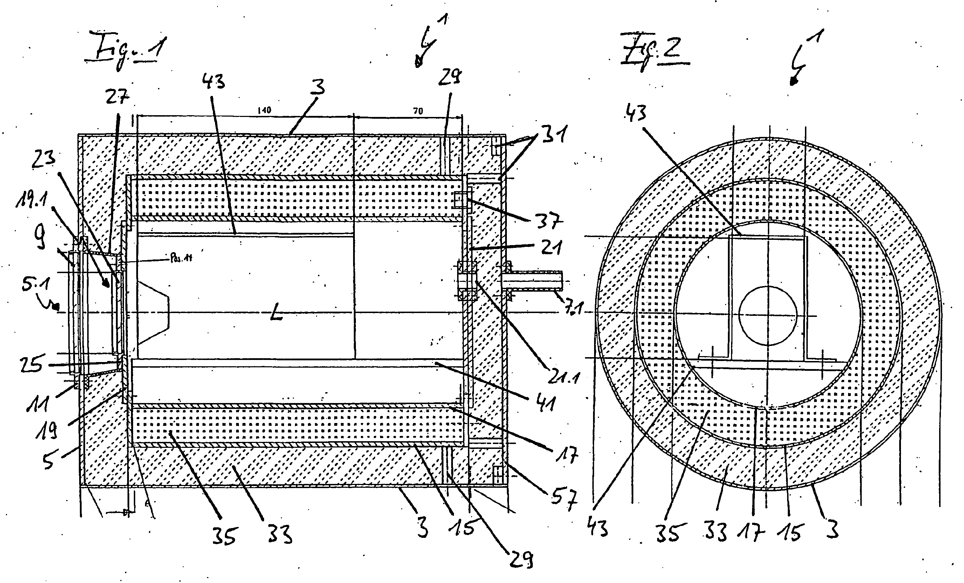

In Fig. 1 ist schematisch ein Kameraschutzgehäuse 1 für die Inspektionsvorrichtung der vorliegenden Erfindung im Längsschnitt dargestellt. Das Kameraschutzgehäuse 1 weist ein Außengehäuse auf, das sich im wesentlichen aus einer Außenwand 3, einer äußeren Frontplatte 5, einer äußeren Rückplatte 7 sowie einer transparenten äußeren Scheibe 9 und einer äußeren Fassung 11 für die äußere Scheibe 9 zusammensetzt. Die Außenwand 3 erstreckt sich in der vorliegenden Ausführungsform im wesentlichen konzentrisch zu einer Längsachse L. In der vorliegenden Ausführungsform wird die Außenwand 3 aus einem Edelstahlrohr mit rundem Querschnitt gebildet. Es ist aber in anderen Ausführungsformen auch möglich, daß die Außenwand 3 mehrteilig ausgebildet ist und dem Außengehäuse einen anders geformten Querschnitt verleiht, z.B. oval, dreieckig, viereckig oder mehreckig. Es ist auch möglich, daß andere Materialien für die Ausbildung der Außenwand verwendet werden. Voraussetzung ist nur, daß diese wärmebeständig und chemisch beständig sind, wobei der Grad der Beständigkeit abhängig ist vom jeweiligen Einsatzort.. Vorzugsweise ist die Außenwand 3 wenigstens auf ihrer der Umgebung ausgesetzten Außenseite poliert, um besser Wärme reflektieren zu können.

Die äußere Frontplatte 5 und die äußere Rückplatte 7 sind in der vorliegenden Ausführungsform ebenfalls aus Edelstahl und wenigstens auf ihren außen liegenden Flächen poliert.
Die äußere Frontplatte 5 weist eine äußere Öffnung 5.1 auf. In der vorliegenden Ausführungsform ist die äußere Öffnung 5.1 kreisrund ausgebildet. In anderen Ausführungsformen kann die äußere Öffnung 5.1 aber auch beliebige andere Formen aufweisen. Die äußere Öffnung 5.1 ist mit der äußeren Scheibe 9 verschlossen. Die äußere Scheibe 9 sitzt in der äußeren Fassung 11 und wird durch diese in Position gehalten. Die äußere Fassung 11 ist gasdicht ausgebildet und mit der äußeren Frontplatte 5 fest aber lösbar verbunden. In der vorliegenden Ausführungsform ist die äußere Fassung 11 mit der äußeren Frontplatte 5 verschraubt. Die äußere Scheibe 9 ist chemisch beständig ausgebildet und besteht in der vorliegenden Ausführungsform aus Borosilikatglas.

An der äußeren Frontplatte 5 kann ein Beleuchtungsring (nicht dargestellt) aus Edelstahl um die äußere Scheibe 9 herum angebracht sein, an welchem mehrere Beleuchtungselemente, z.B. Halogenlampen, angeordnet sind. Eine Stromversorgung erfolgt dann durch eine innere Verkabelung.

Die äußere Rückplatte 7 weist eine Kabeldurchführung 7.1 auf. Die Kabeldurchführung 7.1 ist in der vorliegenden Ausführungsform aus einem hitzebeständigen Kunststoff, z.B. PEEK, könnte aber auch aus Edelstahl oder anderen hitzebeständigen Materialien bestehen. Die Kabeldurchführung 7.1 dient zur Durchführung von Stromkabeln, z.B. zur Stromversorgung einer in dem Kameraschutzgehäuse 1 angeordneten Kamera (nicht dargestellt) oder auch der oben beschriebenen Beleuchtungselemente (nicht dargestellt).

Die äußere Frontplatte 5 und die äußere Rückplatte 7 sind in der vorliegenden Ausführungsform an dem vorderen bzw. hinteren Ende des die Außenwand 3 bildenden Edelstahlrohres mit diesem verschraubt oder in anderer Weise lösbar verbunden. In anderen Ausführungsformen ist es auch möglich, daß entweder nur die äußere Frontplatte 5 oder nur die äußere Rückplatte 7 mit dem jeweiligen Ende der Außenwand 3 verschraubt oder lösbar verbunden ist und das jeweils andere Plattenelement 5 oder 7 mit dem jeweiligen Ende der Außenwand 3 unlösbar verbunden ist, z.B. verschweißt ist.. In der äußeren Rückplatte 7 kann eine gasdicht eingeschraubte Trockenpatrone (nicht dargestellt) angeordnet sein, die mittels Kapillarröhre mit dem Inneren des Kammeraschutzgehäuses 1 verbunden ist.

An einer Außenseite des Außengehäuses sind auch Befestigungspunkte (nicht dargestellt) für eine Abseiltechnik vorgesehen. In der Regel werden solche Befestigungspunkte an einer Oberseite des aus der Außenwand 3 gebildeten Edelstahlrohres als Hakenösen ausgebildet sein, die ein Abseilkabel aufnehmen können. Solche Befestigungspunkte zum Abseilen und Positionieren von Gegenständen sind in der Abseiltechnik allgemein bekannt und werden daher hier nicht näher beschrieben.

Das Kameraschutzgehäuse 1 weist auch ein Innengehäuse auf, daß sich im wesentlichen aus einer äußeren Wand 15, einer inneren Wand 17, einer inneren Frontplatte 19, einer inneren Rückplatte 21, einer inneren Scheibe 23 und einer inneren Fassung 25 für die innere Scheibe 23 zusammensetzt. Die äußere Wand 15 und die innere Wand 17 erstreckt sich in der vorliegenden Ausführungsform im wesentlichen konzentrisch zu der Längsachse L. In der vorliegenden Ausführungsform werden die äußere Wand 15 und die innere Wand 17 jeweils aus einem Aluminiumrohr mit rundem Querschnitt gebildet. Es ist aber in anderen Ausführungsformen auch möglich, daß die äußere Wand 15 und die innere Wand 17 mehrteilig ausgebildet sind und dem Innengehäuse einen anders geformten Querschnitt verleihen, z.B. oval, dreieckig, viereckig oder mehreckig. Es ist auch möglich, daß andere Materialien für die Ausbildung der Außenwand verwendet werden. Voraussetzung ist, daß diese gut wärmeleitend sind.

Die innere Frontplatte 19 und die innere Rückplatte 21 sind in der vorliegenden Ausführungsform ebenfalls aus Aluminium. Die innere Frontplatte 19 weist eine innere Öffnung 19.1 auf. In der vorliegenden Ausführungsform ist die innere Öffnung 19.1 kreisrund ausgebildet. In anderen Ausführungsformen kann die innere Öffnung 19.1 aber auch beliebige andere Formen aufweisen. Die innere Öffnung 19.1 ist mit der inneren Scheibe 23 verschlossen. Die innere Scheibe 23 sitzt in der inneren Fassung 25 und wird durch diese in Position gehalten. Die innere Fassung 25 ist gasdicht ausgebildet und mit der inneren Frontplatte 19 fest aber lösbar verbunden. In der vorliegenden Ausführungsform ist die innere Fassung 25 mit der inneren Frontplatte 19 verschraubt. Die innere Scheibe 23 ist als Wärmeschutzglas ausgebildet.

Die innere Rückplatte 21 weist einen gasdichten Steckverbinder 21.1 auf. Der gasdichte Steckverbinder 21.1 ist in Verbindungsrichtung mit der Kabeldurchführung 7.1 ausgerichtet und besteht aus hitzebeständigen Materialien. Die stromversorgenden Kabel werden durch die Kabeldurchführung 7.1 hindurchgeführt und in den Steckverbinder 21.1 gesteckt.

Die innere Frontplatte 19 und die innere Rückplatte 21 sind in der vorliegenden Ausführungsform an dem vorderen bzw. hinteren Ende der die äußere Wand 15 und die innere Wand 17 bildenden Aluminiumrohre mit diesen verschraubt oder in anderer Weise lösbar verbunden. In anderen Ausführungsformen ist es auch möglich, daß entweder nur die innere Frontplatte 19 oder nur die innere Rückplatte 21 mit dem jeweiligen Ende der äußeren Wand 15 und der inneren Wand 17 verschraubt oder lösbar verbunden ist und das jeweils andere Plattenelement 19 oder 21 mit den jeweiligen Enden der äußeren Wand 15 und der inneren Wand 17 unlösbar verbunden ist.

Die äußere Wand 15 des Innengehäuses ist in räumlichen Abstand zu der Außenwand 3 des Außengehäuses angeordnet. Ebenso sind die innere Frontplatte 19 und die innere Rückplatte 21 in einem Abstand zu der äußeren Frontplatte 5 bzw. Rückplatte 7 angeordnet. Der Abstand beträgt in der vorliegenden Ausführungsform etwa 1/8 des Durchmessers des von der Außenwand 3 gebildeten Edelstahlrohres. Dieses Maß soll nur eine ungefähre Grö-βenordnung wiedergeben. Der Abstand zwischen den Frontplatten 5 und 19, zwischen den Rückplatten 7 und 21 oder zwischen den Wänden 15 und 3 kann durchaus unterschiedlich sein. Der Abstand wird durch mehrere Abstandhalter 27, 29, 31 eingestellt. Die Wahl und Einstellung des Abstandes ist insbesondere abhängig davon, daß die innere Öffnung 19.1 und die äußere Öffnung 5.1 miteinander ausgerichtet sind, derart, daß beide Öffnungen 19.1 und 5.1 in ihrer Gesamtheit eine Gehäuseöffnung bilden. In der vorliegenden Ausführungsform ist die Gehäuseöffnung konzentrisch zur Längsachse L ausgebildet.

Der Abstandhalter 27 ist in der vorliegenden Ausführungsform aus dem Kunststoff PEEK ausgebildet und an der äußeren Frontplatte 5 angeschraubt. Dieser Abstandhalter 27 begrenzt die Gehäuseöffnung 5.1, 19.1 zwischen der inneren Fassung 25 und der äußeren Fassung 11. Der Abstandhalter 27 sowie die äußere Wand 15 und die Außenwand 3 umschließen einen äußeren Ringraum 33, in welchem ein Isoliermedium aus Feststoffen, z.B. Mineralwolle, zur Wärmeisolierung angeordnet ist.

Der Abstand zwischen der Außenwand 3 und der äußeren Wand 15 wird durch den Abstandhalter 29 gehalten und der Abstand zwischen der inneren und äußeren Rückplatte 21 bzw. 7 wird durch den Abstandhalter 31 gehalten.

Die innere Wand 17, die äußere Wand 15 sowie die innere Frontplatte 19 und die innere Rückplatte 21 begrenzen einen inneren Ringraum 35, in welchem ein Wärmespeichermedium angeordnet ist. Es können im Grunde alle dem Fachmann bekannten Wärmespeichermedien eingesetzt werden. In der vorliegenden Ausführungsform soll das Wärmespeichermedium auf der Basis von Paraffinen bestehen, und z.B ein Wärmeparaffin sein, wie dies unter der Marke RUBITHERM® von der Rubitherm GmbH, Hamburg, im Handel erhältlich ist.

In der inneren Rückplatte 21 ist eine Einfüllöffnung ausgebildet, die mit einem Verschlußstopfen 37 zu verschließen und zu öffnen ist.

In Fig. 2 ist sehr gut die konzentrische Anordnung des Edelstahlrohrs und der beiden inneren Aluminiumrohre zu erkennen. Die innere Wand 17 begrenzt zusammen mit der inneren Frontplatte 19 und der inneren Rückplatte 21 sowie der in der inneren Frontplatte 19 angeordneten inneren Scheibe 23 (Fig. 1) einen Innenraum 39. In diesem Innenraum 39 ist eine Koppelplatte 41 angeordnet und insbesondere an die innere Wand 17 geschweißt. Diese Koppelwand ist in der in den Figuren 1 und 2 dargestellten Arbeitsstellung horizontal ausgerichtet. Auf der Koppelplatte 41 ist ein Zusatzgehäuse 43 aus Aluminium angebracht. Das Zusatzgehäuse 41 dient zur Fixierung der Kamera (nicht dargestellt) und zur Ableitung der Kamera-Abwärme über die geschweißte Verbindung zwischen der Koppelplatte 41 und der inneren Wand 17 an das Innengehäuse.

Die Kamera kann über die jeweils geschraubten inneren und äußeren Frontplatten bzw. Rückplatten in das Zusatzgehäuse eingesetzt werden. Das Innengehäuse wird dann mit der eingesetzten Kamera im Außengehäuse positioniert und mit Hilfe der Abstandhalter positioniert. Schließlich werden die äußeren Frontplatte und/oder die äußere Rückplatte an das Edelstahlrohr angeschraubt und das Kameraschutzgehäuse 1 an seinen Befestigungspunkten an die Abseiltechnik angehängt.

Aufgrund der gasdichten Ausbildung findet mit dem erfindungsgemäßen Kameraschutzgehäuse kein wesentlicher Gasaustausch zwischen dem Innengehäuse und der Umwelt statt, so daß die Scheiben 9 und 23 nicht beschlagen.

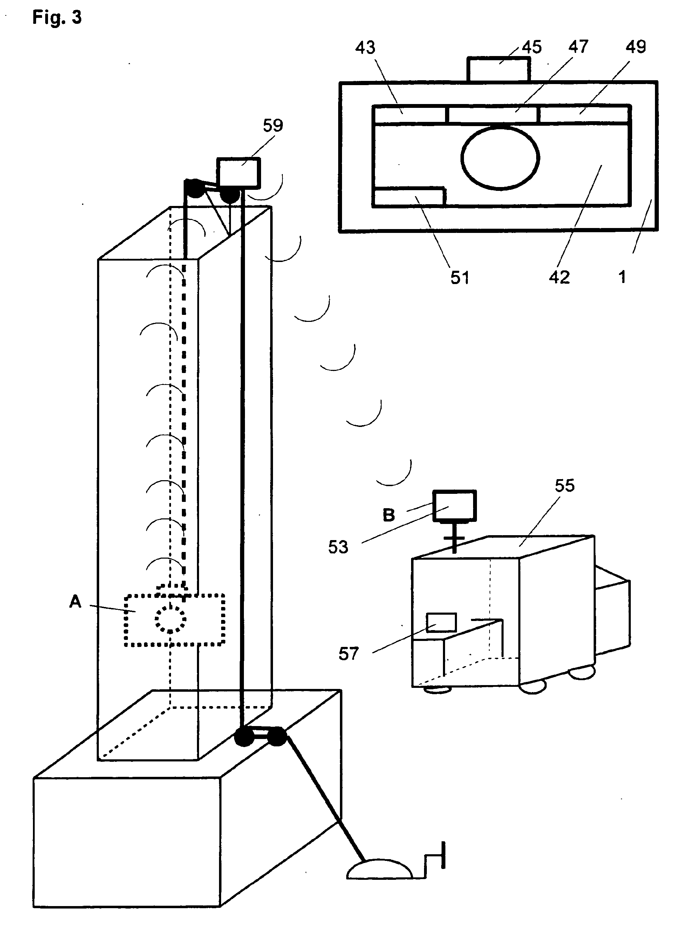

In Fig. 3 ist die Inspektionsvorrichtung in einer schematischen Gesamtansicht dargestellt. Eine Kamera 42 ist in dem Kameraschutzgehäuse 1 eingesetzt und eine Steuereinrichtung 43 ist in oder an der Kamera 42 im Kameraschutzgehäuse 1 angeordnet und steuert die Bildaufnahme der Kamera. Die Steuereinrichtung 43 ist auch mit einer Antriebseinrichtung 45 verbunden, die sie in Abhängigkeit von Steuersignalen (werden unten beschrieben) steuert. Die Antriebseinrichtung 45 ist eine Einheit aus zwei Motoren, einem Linearmotor für die Vertikalbewegung und einem Schrittmotor für die Horizontal- und Drehbewegung, d. h., bis 360°. Die Steuereinrichtung 43 weist auch eine digitale Videobild-Übertragungseinrichtung 47 auf, die Videobild-Signale erzeugt. Eine zur Übertragung des Videobild-Signals genutzte Funkstrecke (A-B) wird auch zur Übertragung eines von der Steuereinrichtung 43 erzeugten Steuersignals für die mit der Kamera 42 bzw. mit dem Kameraschutzgehäuse 1 verbundene Antriebseinrichtung 45 in umgekehrter Richtung (B-A) vorgesehen.

Die Steuereinrichtung 43 weist auch ein Gyroskop 49 zur Wiederfindung einer Inspektionsstelle auf. Die Funkstrecke (A-B, B-A) erstreckt sich zwischen einem ersten Sender/Empfänger 51 der Steuereinrichtung 43 und einem zweiten Sender/Empfänger 53 einer Funk-Leitstelle 55 außerhalb des Schornsteins erstreckt.

Die Funk-Leitstelle 55 weist eine Rechnereinheit 57 auf, auf dem ein Dunst- und Rauch-Korrekturprogramm installiert ist, das die von der Videobild-Übertragungseinrichtung 47 übersendeten Videobild-Signale bearbeitet. Auf der Rechnereinheit 57 ist ein Steuerungsprogramm installiert, das die Steuersignale zur Steuerung erzeugt und über den zweiten Sender/Empfänger 53 an den ersten Sender/Empfänger 51 der Steuereinrichtung (42) sendet. In der Funkstrecke (A-B, B-A) kann ein digitaler Repeater 59 angeordnet ist, der die Funkstrecke von etwa 150 bis 200 m auf das Doppelte verlängert.

## Patentansprüche

1. Inspektionsvorrichtung für Schornsteine mit einer Kamera-Plattform, mit einem Halteseil für die Kamera-Plattform und mit einer Steuereinrichtung (43) zur Steuerung der Kamera-Plattform im Schornstein, wobei die Kamera (42) in einem Kameraschutzgehäuse (1)...mit einem Außengehäuse, einem Innengehäuse und mit einem zwischen dem Außengehäuse und dem Innengehäuse ausgebildeten äußeren Ringraum (33) angeordnet ist, wobei die Steuereinrichtung (43) eine digitale Videobild-Übertragungseinrichtung (47) aufweist, die Videobild-Signale erzeugt, und eine zur Übertragung eines Videobild-Signals genutzte Funkstrecke (A-B, B-A) auch zur Übertragung eines von der Steuereinrichtung (43) erzeugten Steuersignals für eine mit der Kamera (42) verbundene Antriebseinrichtung (45) vorgesehen ist,
**dadurch gekennzeichnet,**
**dass** das Innengehäuse (15, 17, 19,21, 23, 25) eine äußere Wand (15) und eine innere Wand (17) aufweist, die einen geschlossenen inneren Ringraum (35) begrenzen, dass der äußere Ringraum (33) geschlossen ist, wobei der geschlossene innere Ringraum (35) ein Isoliermedium zur Wärmeisolierung enthält und der geschlossene äußere Ringraum (33) ein Wärmespeichermedium zur Wärmespeicherung enthält, und dass in einer Gehäuseöffnung (5.1, 19.1) eine Wärme isolierende, lichtdurchlässige Scheibeneinheit (9, 23) angeordnet ist.

2. Inspektionsvorrichtung nach Anspruch 1,
**dadurch gekennzeichnet,**
**dass** die Antriebseinrichtung (45) die Kamera (42) in Abhängigkeit von dem Steuersignal zu einer Vertikalbewegung, Horizontalbewegung und/oder Drehbewegung antreibt.

3. Inspektionsvorrichtung nach einem der Ansprüche 1 oder 2,
**dadurch gekennzeichnet,**
**dass** die Steuereinrichtung (43) ein Gyroskop (49) zur Wiederfindung einer Inspektionsstelle aufweist.

4. Inspektionsvorrichtung nach einem der Ansprüche 1 bis 3,
**dadurch gekennzeichnet,**
**dass** sich die Funkstrecke zwischen einem ersten Sender/Empfänger (51) der Steuereinrichtung (43) und einem zweiten Sender (53) einer Funk-Leitstelle (55) außerhalb des Schornsteins erstreckt.

5. Inspektionsvorrichtung nach Anspruch 4,
**dadurch gekennzeichnet,**
**dass** die Funk-Leitstelle (55) eine Rechnereinheit (57) aufweist, auf dem ein Dunst- und Rauch-Korrekturprogramm installiert ist, dass die von der Videobild-Übertragungseinrichtung (47) übersendeten Videobild-Signale bearbeitet.

6. Inspektionsvorrichtung nach Anspruch 4 oder 5,
**dadurch gekennzeichnet,**
**dass** auf der Rechnereinheit (57) ein Steuerprogramm installiert ist, das die Steuersignale zur Steuerung erzeugt und über den zweiten Sender/Empfänger (53) an den ersten Sender/Empfänger (51) der Steuereinrichtung (42) sendet.

7. Inspektionsvorrichtung nach einem der Ansprüche 1 bis 6,
**dadurch gekennzeichnet,**
**dass** in der Funkstrecke ein digitaler Repeater (59) angeordnet ist, der die Funkstrecke verlängert.

8. Inspektionsvorrichtung nach einem der Ansprüche 1 bis 7,
**dadurch gekennzeichnet,**
**dass** die Scheibeneinheit (9, 23) eine chemische beständige Scheibe (9) umfasst.

9. Inspektionsvorrichtung nach einem der Ansprüche 1 bis 8,
**dadurch gekennzeichnet,**
**dass** Abstandhalter (27, 29, 31) vorgesehen sind, welche das Innengehäuse (15, 17, 19, 21, 23, 25) in einem vorbestimmten Abstand zum Außengehäuse (3, 5, 7, 9 11) halten.

10. Inspektionsvorrichtung nach einem der Ansprüche 1 bis 9,
**dadurch gekennzeichnet,**
**dass** das Isoliermedium eine Mineralwolle ist.

11. Inspektionsvorrichtung nach einem der Ansprüche 1 bis 10,
**dadurch gekennzeichnet,**
**dass** das Wärmespeichermedium ein Wärmeparaffin ist.

12. Inspektionsvorrichtung nach einem der vorhergehenden Ansprüche,
**dadurch gekennzeichnet,**
**dass** die Scheibeneinheit (9, 23) eine Scheibe (9) aus Borosilikatglas umfasst.

13. Inspektionsvorrichtung nach einem der vorhergehenden Ansprüche,
**dadurch gekennzeichnet,**
**dass** die Scheibeneinheit (9, 23) eine Scheibe (23) aus Wärmeschutzglas umfasst.

14. Inspektionsvorrichtung nach einem der vorhergehenden Ansprüche,
**dadurch gekennzeichnet,**
**dass** die Scheibeneinheit (9, 23) mit einer gasdichten Fassung (11, 25) positioniert ist.

15. Inspektionsvorrichtung nach Anspruch 14,
**dadurch gekennzeichnet,**
**dass** die Scheibeneinheit (9, 23) eine Scheibe (9) aus Borosilikatglas aufweist, die mit einer gasdichten Fassung (11) positioniert ist und eine Scheibe (23) aus Wärmeschutzglas aufweist, die mit einer gasdichten Fassung (25) positioniert ist.

16. Inspektionsvorrichtung nach einem der Ansprüche 9 bis 15,
**dadurch gekennzeichnet,**
**dass** die Abstandhalter (27, 29, 31) aus einem Spezialkunststoff bestehen.

17. Inspektionsvorrichtung nach einem der vorstehenden Ansprüche,
**dadurch gekennzeichnet,**
**dass** das Innengehäuse (15, 17, 19, 21, 23, 25) zwei konzentrische Aluminiumrohre aufweist, die mit ihrem Umfang die äußere Wand (15) und die innere Wand (17) bilden, und dass das Innengehäuse (15, 17, 19, 21, 23, 25) eine innere Rückplatte (21) und eine innere Frontplatte (19) aufweist, die jeweils an einem Ende des Innengehäuses (15, 17, 19, 21, 23, 25) gasdicht mit den beiden Aluminiumrohren abgedichtet und verbunden sind.

18. Inspektionsvorrichtung nach einem der vorstehenden Ansprüche,
**dadurch gekennzeichnet,**
**dass** das Außengehäuse (3, 5, 7, 9, 11) ein Edelstahlrohr aufweist, an dessen vorderen und hinteren Ende jeweils eine äußere Frontplatte (5) bzw. eine äußere Rückplatte (7) gasdicht verbunden ist.

19. Inspektionsvorrichtung nach einem der Ansprüche 17 oder 18,
**dadurch gekennzeichnet,**
**dass** in der inneren und äußeren Frontplatte (5, 19) die Gehäuseöffnung (5.1, 19.1) mit der Scheibeneinheit (9, 23) ausgebildet ist.

20. Inspektionsvorrichtung nach einem der vorstehenden Ansprüche 7 bis 19,
**dadurch gekennzeichnet,**
**dass** im Innengehäuse (15, 17, 19, 21, 23, 25) ein Zusatzgehäuse (43) ortsfest angeordnet ist, in welches eine Kamera aufgenommen werden kann.

## Claims

1. Chimney inspection device with a camera platform with a guy rope for the camera platform and with a control device (43) for controlling the camera platform in the chimney, whereby the camera (42) is placed in a camera protection housing (1) with an outer housing, an inner housing and an outer annular space (33) placed between the outer housing and the inner housing, whereby the control device (43) has a digital video image transmission device (47) which generates video image signals and a radio link (A-B, B-A) used for the transmission of a video image signal is also provided for the transmission of a control signal generated by the control device (43) for a drive device (45) connected with the camera (42),
**characterized in**
**that** the inner housing (15, 17, 19, 21, 23, 25) has an outer wall (15) and an inner wall (17) which delimit a closed inner annular space (35), that the outer annular space (33) is closed, whereby the closed inner annular space (35) contains an insulating medium for the thermal insulation and the closed outer annular space (33) contains a heat storage medium for the heat storage and that a heat insulating translucent pane unit (9, 23) is placed in a housing opening (5.1, 19.1).

2. Inspection device according to claim 1,
**characterized in**
**that** the drive device (45) imparts a vertical motion, horizontal motion and/or rotary motion to the camera (42) depending on the control signal.

3. Inspection device according to any of the claims 1 or 2,
**characterized in**
**that** the control device (43) has a gyroscope (49) to retrieve an inspection site.

4. Inspection device according to any of the claims 1 to 3,
**characterized in**
**that** the radio link extends between a first emitter/receiver (51) of the control device (43) and a second emitter (53) of a radio control station (55) outside the chimney.

5. Inspection device according to claim 4,
**characterized in that**
the radio control station (55) has a computer unit (57) on which a foul air and smoke correction programme is installed which processes the video image signals transmitted by the video image transmission device (47).

6. Inspection device according to claim 4 or 5,
**characterized in**
**that** a control programme which generates the control signals for the control and which emits them over the second emitter/receiver (53) to the first emitter/receiver (51) of the control device (42) is installed on the computer unit (57).

7. Inspection device according to any of the claims 1 to 6,
**characterized in**
**that** a digital repeater (59) which extends the radio link is placed in the radio link.

8. Inspection device according to any of the claims 1 to 7,
**characterized in**
**that** the pane unit (9, 23) comprises a chemical resistent pane (9).

9. Inspection device according to any of the claims 1 to 8,
**characterized in**
**that** spacers (27, 29, 31) are provided which support the inner housing (15, 17, 19, 21, 23, 25) at a predetermined distance from the outer housing (3, 5, 7, 9, 11).

10. Inspection device according to any of the claims 1 to 9,
**characterized in**
**that** the insulating medium is a mineral wool.

11. Inspection device according to any of the claims 1 to 10,
**characterized in**
**that** the heat storage medium is a heat paraffin.

12. Inspection device according to any of the preceding claims,
**characterized in**
**that** the pane unit (9, 23) comprises a pane (9) made of borosilicate glass.

13. Inspection device according to any of the preceding claims,
**characterized in**
**that** the pane unit (9, 23) comprises a pane (23) made of heat protection glass.

14. Inspection device according to any of the preceding claims,
**characterized in**
**that** the pane unit (9, 23) is positioned with a gas-tight frame (11, 25).

15. Inspection device according to claim 14,
**characterized in**
**that** the pane unit (9, 23) has a pane (9) made of borosilicate glass which is positioned with a gas tight frame (11) and has a pane (23) made of heat protection glass which is positioned with a gas-tight frame (25).

16. Inspection device according to any of the claims 9 to 15,
**characterized in**
**that** the spacers (27, 29, 31) are made of special plastic.

17. Inspection device according to any of the preceding claims,
**characterized in**
**that** the inner housing (15, 17, 19, 21, 23, 25) has two concentric aluminium tubes which form with their periphery the outer wall (15) and the inner wall (17) and that the inner housing (15, 17, 19, 21, 23, 25) has an inner rear plate (21) and an inner front plate (19) which are sealed and gas-tightly connected with the two aluminium tubes at each end of the inner housing (15, 17, 19, 21, 23, 25).

18. Inspection device according to any of the preceding claims,
**characterized in**
**that** the outer housing (3, 5, 7, 9, 11) has a stainless steel tube at each front and rear end of which an outer front plate (5) and/or an outer rear plate (7) is gas-tightly connected.

19. Inspection device according to any of the claims 17 or 18,
**characterized in**
**that** the housing opening (5.1, 19.1) with the pane unit (9, 23) is configured in the inner and outer front plate (5, 19).

20. Inspection device according to any of the preceding claims 7 to 19,
**characterized in**
**that** an additional housing (43) is placed fixed in the inner housing (15, 17, 19, 21, 23, 25) in which a camera can be received.

## Revendications

1. Dispositif d'inspection pour cheminées avec une plateforme pour caméra, avec un câble de retenue pour la plateforme pour caméra et avec un dispositif de commande (43) pour la commande de la plateforme pour caméra dans la cheminée, la caméra (42) étant placée dans un boîtier de protection pour caméra (1) avec un boîtier extérieur, un boîtier intérieur et avec un espace annulaire extérieur (33) configuré entre le boîtier extérieur et le boîtier intérieur, le dispositif de commande (43) présentant un dispositif de transmission d'image vidéo numérique (47) qui produit des signaux d'image vidéo et un trajet radioélectrique (A-B, B-A) utilisé pour la transmission d'un signal d'image vidéo étant également prévu pour la transmission d'un signal de commande produit par le dispositif de commande (43) pour un dispositif d'entraînement (45) relié à la caméra (42),
**caractérisé en ce**
**que** le boîtier intérieur (15, 17, 19, 21, 23, 25) présente une paroi extérieure (15) et une paroi intérieure (18) qui délimitent un espace annulaire intérieur fermé (35), que l'espace annulaire extérieur (33) est fermé, l'espace annulaire intérieur fermé (35) contenant un agent isolant pour l'isolation thermique et l'espace annulaire extérieur fermé (33) contenant un agent de stockage de la chaleur pour le stockage de la chaleur et qu'une unité de vitre (9, 23) transparente, isolant de la chaleur, est placée dans une ouverture de boîtier (5.1, 19.1).

2. Dispositif d'inspection selon la revendication 1,
**caractérisé en ce**
**que** le dispositif d'entraînement (45) entraîne la caméra (42) en fonction du signal de commande pour effectuer un mouvement vertical, un mouvement horizontal et/ou un mouvement de rotation.

3. Dispositif d'inspection selon l'une des revendications 1 ou 2,
**caractérisé en ce**
**que** le dispositif de commande (43) présente un gyroscope (49) pour retrouver un endroit d'inspection.

4. Dispositif d'inspection selon l'une des revendications 1 à 3,
**caractérisé en ce**
**que** le trajet radioélectrique s'étend entre un premier émetteur/récepteur (51) du dispositif de commande (43) et un second émetteur (53) d'un poste de commande radioélectrique (55) à l'extérieur de la cheminée.

5. Dispositif d'inspection selon la revendication 4,
**caractérisé en ce**
**que** le poste de commande radioélectrique (55) présente un ordinateur (57) sur lequel est installé un programme de correction d'émanations et de fumée qui traite les signaux d'image vidéo transmis par le dispositif de transmission d'images vidéo (47).

6. Dispositif d'inspection selon la revendication 4 ou 5,
**caractérisé en ce**
**qu'**un programme de commande, qui produit les signaux de commande pour la commande et qui les envoie par le second émetteur/récepteur (53) au premier émetteur/récepteur (51) du dispositif de commande (42), est installé sur l'ordinateur (57).

7. Dispositif d'inspection selon l'une des revendications 1 à 6,
**caractérisé en ce**
**qu'**un répéteur numérique (59) qui prolonge le trajet radioélectrique est placé dans le trajet radioélectrique.

8. Dispositif d'inspection selon l'une des revendications 1 à 7,
**caractérisé en ce**
**que** l'unité de vitre (9, 23) comprend une vitre résistante aux substances chimiques (9).

9. Dispositif d'inspection selon l'une des revendications 1 à 8,
**caractérisé en ce**
**que** des écarteurs (27, 39, 31) sont prévus qui maintiennent le boîtier intérieur (15, 17, 19, 21, 23, 25) à un écart prédéfini par rapport au boîtier extérieur (3, 5, 7, 9, 11).

10. Dispositif d'inspection selon l'une des revendications 1 à 9,
**caractérisé en ce**
**que** l'agent isolant est une laine minérale.

11. Dispositif d'inspection selon l'une des revendications 1 à 10,
**caractérisé en ce**
**que** l'agent de stockage de chaleur est une paraffine thermique.

12. Dispositif d'inspection selon l'une des revendications précédentes,
**caractérisé en ce**
**que** l'unité de vitre (9, 23) comprend une vitre (9) en verre au borosilicate.

13. Dispositif d'inspection selon l'une des revendications précédentes,
**caractérisé en ce**
**que** l'unité de vitre (9, 23) comprend une vitre (23) en verre calorifuge.

14. Dispositif d'inspection selon l'une des revendications précédentes,
**caractérisé en ce**
**que** l'unité de vitre (9, 23) est positionnée avec une monture étanche au gaz (11, 25).

15. Dispositif d'inspection selon la revendication 14,
**caractérisé en ce**
**que** l'unité de vitre (9, 23) présente une vitre (9) en verre au borosilicate qui est positionnée avec une monture étanche au gaz (11) et présente une vitre (23) en verre calorifuge qui est positionnée avec une monture étanche au gaz (25).

16. Dispositif d'inspection selon l'une des revendications 9 à 15,
**caractérisé en ce**
**que** les écarteurs (27, 39, 31) sont en plastique spécial.

17. Dispositif d'inspection selon l'une des revendications précédentes,
**caractérisé en ce**
**que** le boîtier intérieur (15, 17, 19, 21, 23, 25) présente deux tubes d'aluminium concentriques qui forment avec leur périphérie la paroi extérieure (15) et la paroi intérieure (17) et que le boîtier intérieur (15, 17, 19, 21, 23, 25) présente une plaque arrière intérieure (21) et une plaque frontale intérieure (19) qui sont rendues étanches et qui sont reliées en étant étanches au gaz aux deux tubes en aluminium respectivement à une extrémité du boîtier intérieur (15, 17, 19, 21, 23, 25).

18. Dispositif d'inspection selon l'une des revendications précédentes,
**caractérisé en ce**
**que** le boîtier extérieur (3, 5, 7, 9, 11) présente un tube en acier inoxydable à l'extrémité antérieure et à l'extrémité postérieure duquel une plaque frontale extérieure (5) et/ou une plaque arrière extérieure (7) est respectivement reliée en étant étanche au gaz.

19. Dispositif d'inspection selon l'une des revendications 17 ou 18,
**caractérisé en ce**
**que** l'ouverture du boîtier (5.1, 19.1) avec l'unité de vitre (9, 23) est configurée dans la plaque frontale intérieure et la plaque frontale extérieure (5, 19).

20. Dispositif d'inspection selon l'une des revendications précédentes 7 à 19,
**caractérisé en ce**
**qu'**un boîtier supplémentaire (43), dans lequel une caméra peut être logée, est placé fixe dans le boîtier intérieur (15, 17, 19, 21, 23, 25).
